# EUROPEAN PATENT APPLICATION

(11) **EP 1 044 777 A1**
(43) Date of publication of application: **18.10.2000**
(21) Application number: 00108167.8
(22) Date of filing: 13.04.2000
(51) Int. Cl.: B29C 35/08, B29B 15/10

(54) **Molding method for corrosion-resistant FRP**

(30) Priority: 15.04.1999 JP 10768199
(71) Applicant: SHOWA DENKO KABUSHIKI KAISHA, Tokyo 105-8518 (JP)
(72) Inventor: Yamamoto, Tomio, Honjo-shi, Saitama 367-0034 (JP); Ohtani, Kazuo, Kumagaya-shi, Saitama (JP); Miura, Kenji, Isesaki-shi, Gunma (JP); Sendai, Hidetake, Kawasaki-shi, Kanagawa (JP); Kamata, Hirotoshi, C/O Kawasaki Research Labor., Kawasaki-shi, Kanagawa 210-0867 (JP)
(74) Representative: Strehl Schübel-Hopf & Partner

(57) **Abstract**

A method for molding an FRP, which comprises irradiating a resin composition with light, the composition comprising by weight of (A) an isophthalic acid-derived unsaturated polyester resin and/or a vinyl ester resin containing a vinyl ester oligomer having a specific structure and diluted with a styrenic monomer and/or a (meth)acrylic monomer, and optionally (B) a fiber reinforcing material and/or filler, and (C) a photopolymerization initiator.

## Description

The present invention relates to a method for molding an FRP which comprises a specific unsaturated polyester resin and/or vinyl ester resin and is used for a tank or similar apparatus requiring corrosion resistance. The invention also relates to a method for curing a corrosion-resistant FRP which is suitable for lining such as FRP lining, resin mortar lining, or flake lining for protecting a tank, a pipe, a concrete bath, a floor and the like from corrosive environment.

In the field of corrosion prevention, a corrosion-resistant FRP has been developed due to excellent corrosion resistance of a matrix thereof, a low cost, and easy moldability provided through curing at ambient temperature. A variety of resins are used as a matrix of corrosion-resistant FRPs. For example, unsaturated polyester resins such as isophthalic acid-based polyester resin, bisphenol-based polyester resin, and chlorendic acid-based polyester resin; vinyl ester resins; epoxy resins; and phenolic resins are used. Among these, vinyl ester resins are employed due to excellent corrosion resistance in a field where unsaturated polyester resin cannot be applied, and use of vinyl ester resins has increased.

Vinyl ester resins have excellent resistance to chemicals. Generally, a corrosion-resistant FRP containing a bisphenol vinyl ester resin serving as a matrix has excellent acid resistance and alkali resistance, while a corrosion-resistant FRP containing a novolak vinyl ester resin serving as a matrix has excellent acid resistance and solvent resistance. However, resistance to acid and alkali under severe conditions and solvent resistance to ketones such as methyl ethyl ketone and acetone and alcohols such as methanol are insufficient.

Corrosion resistance of an FRP depends upon resistance to chemicals of a cured resin contained in the FRP. Although choice of the resin is critical in performance of a corrosion-resistant layer formed from an FRP, improvement of anti-corrosion performance has reached a plateau. Japanese Unexamined Patent Publication (*kokai*) No. 4-88065 and other documents disclose that a method for improving anti-corrosion performance of an FRP through application of a high-performance primer serving as an undercoat. However, the method is not basic resolution for improving anti-corrosion performance of the resin *per se*. No investigation has been carried out in order to improve anti-corrosion performance other than modification of the composition of the resin that has already reached a plateau.

In view of the foregoing, the present invention is to provide a method for curing a corrosion-resistant FRP in which anti-corrosion performance of an unsaturated polyester resin and vinyl ester resin is enhanced, which method is not based on modification of the composition of the resin, but based on a method conventionally regarded as an insignificant one and untried.

Accordingly, the present invention provides a method for molding a corrosion-resistant FRP, which comprises irradiating a resin composition with light, the composition comprising
100 parts by weight of (A) an isophthalic acid-based unsaturated polyester resin and/or a vinyl ester resin containing a vinyl ester oligomer having a structure represented by formula (1) 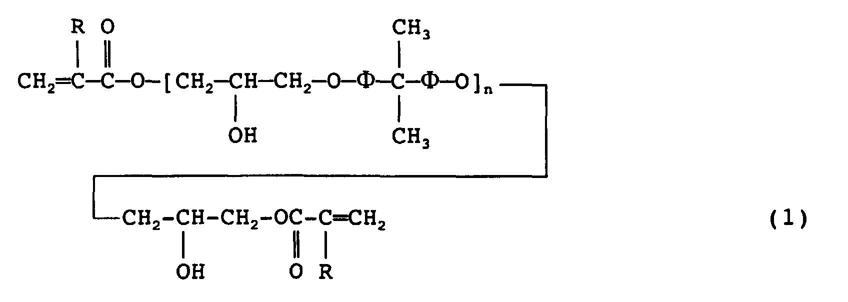 wherein Φ represents a p-phenylene group, R each independently represents a hydrogen atom or a methyl group, and n is 1-6, and/or a vinyl ester oligomer having a structure represented by formula (2) 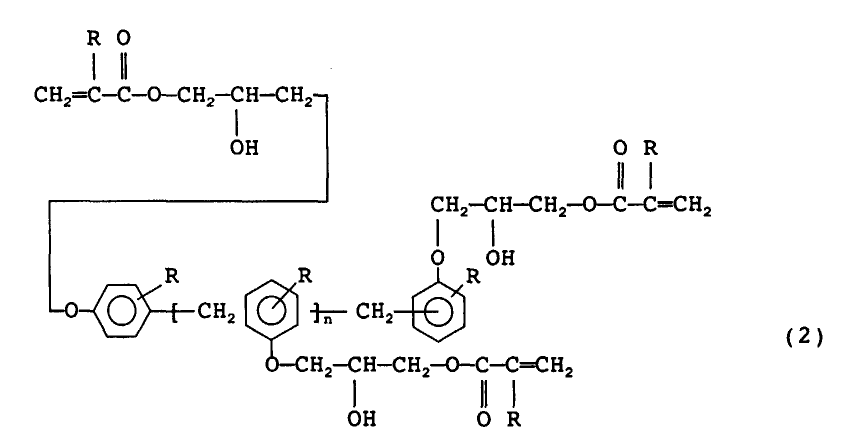 wherein R each independently represents a hydrogen atom or a methyl group and n is 1-5, which oligomers are diluted with a styrenic monomer and/or a (meth)acrylic monomer;
0-200 parts by weight of (B) a fiber reinforcing material and/or filler; and
0.1-10 parts by weight of (C) a photopolymerization initiator.

The present invention also provides a method for molding a corrosion-resistant FRP, which comprises B-staging the above-mentioned resin composition according to the invention to thereby produce a prepreg and irradiating the prepreg with light for curing.

The present invention employs an isophthalic acid-based unsaturated polyester resin and/or a vinyl ester resin containing an oligomer having a structure represented by formula (1) and/or an oligomer having a structure represented by formula (2), which oligomers are diluted with a styrenic monomer and/or a (meth)acrylic monomer (hereinafter the two resins may be referred to as resin components). In the present invention, the expression "a method for molding an FRP" includes molding of an FRP and lining of a resin.

The isophthalic acid-based unsaturated polyester resin which is employed in the present invention is a resin which is obtained by dissolving a condensation product (unsaturated polyester) typically formed through esterification of a polyhydric alcohol and an acid component comprising an unsaturated polybasic acid and isophthalic acid in a polymerizable monomer such as styrene.

The vinyl ester resin is a resin which is obtained by dissolving an oligomer having a structure represented by formula (1) and/or an oligomer having a structure represented by formula (2) in a polymerizable monomer such as styrene.

Unsaturated polyesters serving as raw materials of the isophthalic acid-based unsaturated polyester resin may be produced through a known method. Specifically, the polyesters may be produced through reaction between an acid component comprising a polybasic acid having no polymerizable unsaturated bond and predominantly comprising isophthalic acid and a polymerizable unsaturated polybasic acid such as fumaric acid, maleic acid or itaconic acid or an anhydride thereof and an alcohol component comprising a polyhydric alcohol such as ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, a bisphenol A-ethylene oxide adduct or bisphenol A-propylene oxide adduct.

Vinyl esters serving as a raw material of the vinyl ester resin (epoxy acrylate resin) are polyester (meth)acrylates (vinyl esters) comprising an oligomer having a structure represented by formula (1) and/or an oligomer having a structure represented by formula (2).

The unsaturated polyester or vinyl ester which is employed as the resin components of the present invention preferably has a relatively high unsaturation degree, and may include those polyester or vinyl ester having an unsaturated group equivalent (molecular weight per unsaturated group) of approximately 100-800. Synthesis of those compounds having an unsaturated group equivalent of less than 100 is difficult, and a cured product having a high hardness is difficult to be produced from those compounds having an unsaturated group equivalent in excess of 800.

The above-described unsaturated polyester resin or vinyl ester resin which is employed in the present invention typically comprises the above-described unsaturated polyester or vinyl ester mixed with an unsaturated group-containing monomer (reactive diluent) such as a styrene monomer. The monomer containing an unsaturated group is an important component which facilitates kneading and impregnation of an fiber reinforcing material and a filler during production of a composite material and which enhances properties of a molded product such as hardness, strength, resistance to chemicals, and weather resistance.

As a monomer having an unsaturated group, examples of the polymerizable monomers include styrenic monomers such as chlorostyrene, vinyltoluene, divinylbenzene, and vinylbenzyl monomers disclosed in Japanese Patent No. 2851414 and Japanese Examined Patent Publication (*kokoku*) No. 6-17423; methyl (meth)acrylate; ethyl (meth)acrylate; ethylene glycol di(meth)acrylate; and dicyclopentenyl (meth)acrylate. As a monomer having an unsaturated group, styrenic monomers are preferred. Particularly, a styrene monomer is effective for enhancing anti-corrosion performance.

The monomer having an unsaturated group may typically be added in an amount of 10-250 parts by weight, preferably 20-100 parts by weight, based on 100 parts by weight of the unsaturated polyester or vinyl ester. When the amount is less than 10 parts by weight, the viscosity of the resin may increase to result in poor workability, impregnation properties, and anti-corrosion performance, whereas when the amount is in excess of 250 parts by weight, strength and heat resistance of a cure product may be insufficient and the resin may not be suited as a matrix of a corrosion-resistant FRP.

The fiber reinforcing materials which may be used in the present invention are organic or inorganic fibers. There may be employed a variety of known fibers, such as glass fiber, carbon fiber, aramid fiber, polyethylene terephthalate fiber, and Vinylon fiber. Needless to say, these fibers may be used in combination. The amount thereof is 0-200 parts by weight, preferably 0-100 parts by weight, based on 100 parts by weight of the resin. The fiber reinforcing materials may be in a known form such as a surface mat, chopped strand mat, roving cloth or short fiber.

In the present invention, the filler may be used with or without a fiber reinforcing material. The filler which may be used is an inorganic filler, an organic filler or a polymer. Examples of the inorganic filler include known ones such as glass flake, glass powder, glass beads, silica, calcium carbonate, talc, clay, aluminum hydroxide, barium sulfate or titanium oxide, and these inorganic fillers may be used in combination. The amount of the inorganic filler may be 0-300 parts by weight, preferably 0-200 parts by weight, based on 100 parts by weight of the resin. If the amount of the inorganic filler is in excess of 300 parts by weight, the viscosity of the resin components may increase to result in poor impregnation properties, and there may arise such problems that foam tends to persist in the resins. These problems cause deterioration of quality.

Examples of organic fillers and polymers which may be added to the compositions of the present invention include those which may also serve as low-shrinkage materials, such as known polystyrene, polyvinyl acetate, polymethyl methacrylate, polyethylene, polyvinylidene chloride microballoon and polyacrylonitrile microballoon. In order to serve as low-shrinkage materials, the organic fillers and polymers may be used in amounts of 0-40 parts by weight, preferably 0-30 parts by weight, based on 100 parts by weight of the resin. Amounts in excess of 40 parts by weight may result in poor impregnation properties due to excessively high viscosity, as well as may cause deterioration of quality.

In the present invention, a pigment may further be added to the resin composition. No particular limitation is imposed on the type of the pigment, and organic and inorganic pigments may be used. Amounts of the pigments may be not more than 20 parts by weight, preferably not more than 10 parts by weight, based on 100 parts by weight of the resin components.

Known photopolymerization initiators such as a UV light-polymerization initiator, a visible light-polymerization initiator and a near infrared light-polymerization initiator may be used as the photopolymerization initiator for the present invention having photosensitivity within an arbitrary range between UV range and near infrared range inclusive.

There may be used known UV light-polymerization initiators such as acetophenone-based initiators, benzylketal-based initiators, and (bis)acylphosphine oxide-based initiators. Since a short-wavelength ultraviolet light exhibits low transmission to an FRP material, there may preferably be used UV light-polymerization initiators having photosensitivity at a comparatively long wavelength, preferably (bis)acylphosphine oxide-based initiators having photosensitivity in a wavelength range at 300 nm or more.

The (bis)acylphosphine oxide compound usable for the present invention may be represented by formula (6) 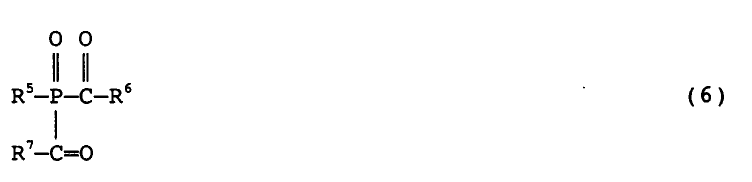 wherein each of R⁵ to R⁷ independently represents a linear, branched or cyclic alkyl group having from 1 to 18 carbon atoms; an unsubstituted aryl group or an aryl group having a substituent selected from a halogen atom, an alkyl group having from 1 to 8 carbon atoms, an alkoxyl group having from 1 to 8 carbon atoms and an unsubstituted aryl group; an unsubstituted aralkyl group or an aralkyl group having a substituent selected from an alkyl group having from 1 to 8 carbon atoms, an alkoxyl group having from 1 to 8 carbon atoms and an unsubstituted aryl group; an alkenyl group having from 2 to 8 carbon atoms; or an alkynyl group having from 2 to 8 carbon atoms, or formula (7) 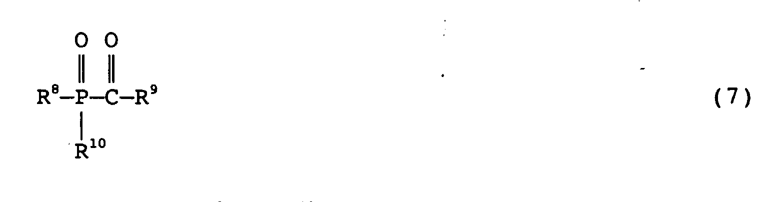 wherein each of R⁸ to R¹⁰ independently represents a linear, branched or cyclic alkyl group having from 1 to 18 carbon atoms; an unsubstituted aryl group or an aryl group having a substituent selected from a halogen atom, an alkyl group having from 1 to 8 carbon atoms, an alkoxyl group having from 1 to 8 carbon atoms and an unsubstituted aryl group; an unsubstituted aralkyl group or an aralkyl group having a substituent selected from an alkyl group having from 1 to 8 carbon atoms, an alkoxyl group having from 1 to 8 carbon atoms and an unsubstituted aryl group; an alkenyl group having from 2 to 8 carbon atoms; an alkynyl group having from 2 to 8 carbon atoms; or a 5- or 6-membered heterocyclic group having an oxygen, nitrogen or sulfur atom.

Specific examples of R⁶ and R⁷ in formula (6) include an alkyl group such as methyl group, ethyl group, n-propyl group, isopropyl group, n-butyl group, sec-butyl group, tert-butyl group, n-hexyl group, 2-ethylhexyl group, 2,4,4-trimethylpentyl group, n-dodecyl group, tetradecyl group, cyclopentyl group and cyclohexyl group; an aryl group such as phenyl group, 2,5-dimethylphenyl group, 2,4,6-trimethylphenyl group, 4-propylphenyl group, 4-octylphenyl group, 2,6-dichlorophenyl group, 4-methoxyphenyl group, 2,6-dimethoxyphenyl group, 2,6-diethoxyphenyl group, 3,4,5-trimethoxyphenyl group, 4-ethoxyphenyl group, 4-butoxyphenyl group, biphenyl group, naphthyl group, 2-methylnaphthyl group and 2-ethylnaphthyl group; an aralkyl group such as benzyl group, diphenylmethyl group, phenethyl group, tolytyl group, p-tolylethyl group, p-tolylmethyl group, 4-ethylphenylmethyl group, 4-hexylphenylmethyl group, p-anisylmethyl group and 4-ethoxyphenylmethyl group; an alkenyl group such as vinyl group, allyl group, isopropenyl group, 3-hexenyl group, 2,4-hexadienyl group and isoprenyl group; and an alkynyl group such as 1-propynyl group, 1-butynyl group, 2-butynyl group, 1-hexynyl group and 1,3-hexadiynyl group.

Specific examples of R⁸ to R¹⁰ in formula (7) include an alkyl group such as methyl group, ethyl group, n-propyl group, isopropyl group, n-butyl group, sec-butyl group, tert-butyl group, n-hexyl group, 2-ethylhexyl group, 2,4,4-trimethylpentyl group, n-dodecyl group, tetradecyl group, cyclopentyl group and cyclohexyl group; an aryl group such as phenyl group, 2,5-dimethylphenyl group, 2,4,6-trimethylphenyl group, 4-propylphenyl group, 4-octylphenyl group, 2,6-dichlorophenyl group, 4-methoxyphenyl group, 2,6-dimethoxyphenyl group, 2,6-diethoxyphenyl group, 3,4,5-trimethoxyphenyl group, 4-ethoxyphenyl group, 4-butoxyphenyl group, biphenyl group, naphthyl group, 2-methylnaphthyl group and 2-ethylnaphthyl group; an aralkyl group such as benzyl group, diphenylmethyl group, phenethyl group, tolytyl group, p-tolylethyl group, p-tolylmethyl group, 4-ethylphenylmethyl group, 4-hexylphenylmethyl group, p-anisylmethyl group and 4-ethoxyphenylmethyl group; an alkenyl group such as vinyl group, allyl group, isopropenyl group, 3-hexenyl group, 2,4-hexadienyl group and isoprenyl group; an alkynyl group such as 1-propynyl group, 1-butynyl group, 2-butynyl group, 1-hexynyl group and 1,3-hexadiynyl group; and a heterocyclic group such as furyl group, pyranyl group, pyrrolyl group, pyridyl group, imidazolyl group, triazinyl group, thienyl group, oxazolyl group and thiazolyl group.

These initiators have photosensitivity in a range of wavelengths longer (visible range at 400 nm or longer) than wavelength where conventionally employed UV polymerization initiators have photosensitivity; exhibit excellent optical transparency; and generate acyl radicals and phosphinoyl radicals through photolysis. Thus, these initiators have an initiation efficiency higher than that of a conventionally employed UV polymerization initiator.

Examples of the bisacylphosphine oxide compounds represented by formula (6) used in the present invention include bis(2,6-dichlorobenzoyl)-phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-biphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,6-dimethoxyphenylphosphine oxide, bis(2,6-dichlorobenzoyl)-dodecylphosphine oxide, bis(2,6-dichlorobenzoyl)-4-octylphenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-phenylphosphine oxide, bis(2-methyl-1-naphthoyl)-4-biphenylphosphine oxide, bis(2-methyl-1-naphthoyl)-4-ethoxybiphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methyl-1-naphthoyl)-4-methoxyphenylphosphine oxide, and bis(2,6-dimethoxybenzoyl)-2,4,4-trimethylpentylphosphine oxide.

Examples of the acylphosphine oxide compounds represented by formula (7) used in the present invention include 2,4,6-trimethylbenzoyl-diphenylphosphine oxide, 2,6-diphenylbenzoyl-diphenylphosphine oxide, 2,6-dimethoxybenzoyl-diphenylphosphine oxide, 2,3,5,6-tetramethylbenzoyl-diphenylphosphine oxide, 2,6-dichlorobenzoyl-diphenylphosphine oxide, 2,3,6-trimethylbenzoyl-diphenylphosphine oxide, 2-phenyl-6-methylbenzoyl-diphenylphosphine oxide, 2,6-dibromobenzoyl-diphenylphosphine oxide, 2,8-dimethylnaphthalene-1-carbonyl-diphenylphosphine oxide, 1,3-dimethoxynaphthalene-2-carbonyl-diphenylphosphine oxide, methyl 2,4,6-trimethylbenzoyl-phenylphosphinate, methyl 2,6-dimethylbenzoyl-phenylphosphinate, and methyl 2,6-dichlorobenzoyl-phenylphosphinate.

Specific examples thereof include Irgacure 1700 (product of Ciba Specialty Chemicals K. K.), which is a mixture (75%/25%) of 2-hydroxy-2-methyl-1-phenylpropan-1-one (Darocur 1173, product of Ciba Specialty Chemicals K. K.) and bis(2,6-dimethoxybenzoyl)-2,4,4-trimethylpentylphosphine oxide (product of Ciba Specialty Chemicals K. K.); Irgacure 1800 (product of Ciba Specialty Chemicals K. K.), which is a mixture (75%/25%) of 1-hydroxy-cyclohexyl phenyl ketone (Irgacure 184, product of Ciba Specialty Chemicals K. K.) and bis(2,6-dimethoxybenzoyl)-2,4,4-trimethylpentylphosphine oxide (product of Ciba Specialty Chemicals K. K.); Irgacure 1850 (product of Ciba Specialty Chemicals K. K.), which is a mixture (50%/50%) of the above two compounds; bis(2,4,6-trimethylbenzoyl)-phenylphosphine oxide (Irgacure 819, product of Ciba Specialty Chemicals K. K.); 2,4,6-trimethylbenzoyl-diphenylphosphine oxide (Lucirin TPO, product of BASF A.G.); and Darocur 4265, which is a mixture (50%/50%) of 2-hydroxy-2-methyl-1-phenylpropan-1-one (Darocur 1173, product of Ciba Specialty Chemicals K. K.) and 2,4,6-trimethylbenzoyldiphenylphosphine oxide (Lucirin TPO, product of BASF A.G.).

Examples of visible light-polymerization initiators having photosensitivity in a visible light range include single visible light-polymerization initiators such as camphorquinone, benzil, trimethylbenzoyldiphenylphosphine oxide, methylthioxanthone and bis(cyclopentadienyl)titanium-di(pentafluorophenyl), which are described in Yamaoka *et al*., "Hyomen," 27(7), 548 (1989), Sato *et al*., "Resumes of the Third Polymer Material Forum," 1BP18 (1994), etc.; and known combination initiator systems such as organic peroxide catalyst/dye systems; diphenyliodonium salt/dye systems; biimidazole/keto compound systems; hexaarylbiimidazole compound/hydrogen-donor systems; mercaptobenzothiazole/thiopyrylium salt systems; metal arene/cyanine dye systems; and a hexaarylbiimidazole/radical-generator system which is described in Japanese Examined Patent Publication (*kokoku*) No. 45-37377.

The hexaarylbimidazole may be represented by formula (5) 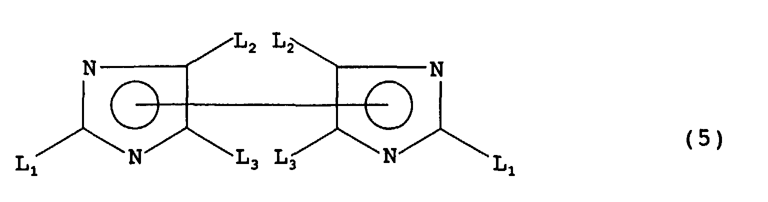 wherein each of L₁, L₂ and L₃ independently represents an aryl group or a substituted aryl group.

In formula (5), L₁ to L₃ each is preferably an aryl group or a substituted aryl group having a substituent selected from a halogen atom, an alkyl group having from 1 to 8 carbon atoms, an alkoxyl group having from 1 to 8 carbon atoms and an unsubstituted aryl group. Specific examples thereof include a phenyl group, a 2,5-dimethylphenyl group, a 2,4,6-trimethylphenyl group, a 4-propylphenyl group, a 4-octylphenyl group, a 2-chlorophenyl group, a 2,4-dichlorophenyl group, a 2,6-dichlorophenyl group, a 2-bromophenyl group, a 4-methoxyphenyl group, a 2,6-dimethoxyphenyl group, a 2,6-diethoxyphenyl group, a 3,4,5-trimethoxyphenyl group, a 4-ethoxyphenyl group, a 4-butoxyphenyl group, a biphenyl group, a naphthyl group, a 2-methylnaphthyl group and a 2-ethylnaphthyl group.

Examples of the hexaarylbimidazole compounds include bis(2,4,5-triphenyl)imidazole, bis(2-o-chlorophenyl-4,5-diphenyl)imidazole, bis(2-o,p-dichlorophenyl-4,5-diphenyl)imidazole and bis(2-o-bromophenyl-4,5-diphenyl)imidazole. Of these, bis(2-o-bromophenyl-4,5-diphenyl)imidazole is particularly preferred.

Japanese Examined Patent Publication (*kokoku*) No. 41-3545 discloses such hexaarylbimidazole compounds in detail.

Examples of a preferable photopolymerization initiator having photosensitivity in visible light range or near infrared range which may be used in the present invention include a combination of a cationic dye represented by formula (3)

D⁺·A⁻ (3)

wherein D⁺ represents a dye cation which has photosensitivity in visible light range or near infrared range and which is derived from methine, polymethine, cyanine, xanthene, oxazine, thiazine, arylmethane or pyrylium, and A⁻ represents an anion, and an organic boron compound represented by the above-mentioned formula (4) 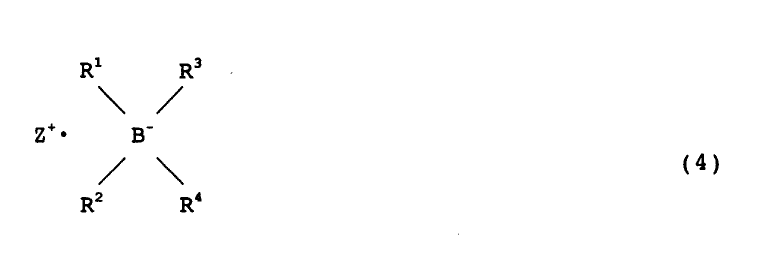 wherein Z⁺ represents an arbitrary cation, each of R¹, R², R³ and R⁴ independently represents an alkyl group, an aryl group, an aralkyl group, an alkenyl group, an alkynyl group, a silyl group, a heterocyclic group or a halogen atom.

In formula (4), each of R¹, R², R³ and R⁴ independently represents an alkyl group, an aryl group, an aralkyl group, an alkenyl group, an alkynyl group, a silyl group, a heterocyclic group or a halogen atom. These groups other than a halogen atom may have a substituent.

The above-described alkyl group having 1 - 12 carbon atoms may be substituted. Specific examples include a methyl group, an ethyl group, a propyl group, an isopropyl group, a butyl group, an isobutyl group, a sec-butyl group, a tert-butyl group, a pentyl group, a hexyl group, a heptyl group, an octyl group, a dodecyl group, a cyclopentyl group, a cyclohexyl group, a 3-methoxypropyl group, a 4-chlorobutyl group and a 2-diethylaminoethyl group.

The above-described aryl group may be substituted. The substituent of the aryl group is preferably an alkyl group having from 1 to 8 carbon atoms or an alkoxyl group having from 1 to 8 carbon atoms. Specific examples include a phenyl group, a tolyl group, a xylyl group, a 4-ethylphenyl group, a 4-tert-butylphenyl group, a 4-methoxyphenyl group, a 4-diethylaminophenyl group, a 2-methylphenyl group, a 2-methoxyphenyl group, a biphenyl group, a naphthyl group and a 4-methylnaphthyl group.

The above-described aralkyl group may be substituted. Specific examples include a benzyl group, a phenethyl group, a propiophenyl group, an α-naphthylmethyl group, a β-naphthylmethyl group and a p-methoxybenzyl group.

The above-described alkenyl group may be substituted. Specific examples include a vinyl group, a propenyl group, a butenyl group, a pentenyl group, a hexenyl group, a heptenyl group, an octenyl group, a dodecenyl group and a prenyl group. Of these, alkenyl groups having 2-12 carbon atoms are preferred.

The above-described alkynyl group may be substituted. Specific examples include a butynyl group, a pentynyl group, a hexynyl group and an octynyl group. Of these, alkynyl groups having 4-12 carbon atoms are preferred.

The above-described silyl group may be substituted. The substituent of the silyl group is preferably an alkyl group having from 1 to 8 carbon atoms or an unsubstituted aryl group. Specific examples include a silyl group, a trimethylsilyl group, a triethylsilyl group, a dimethylphenylsilyl group, a methyldiphenylsilyl group and a triphenylsilyl group.

The above-described heterocyclic group may be substituted. The substituent of the heterocyclic group is preferably an alkyl group having from 1 to 8 carbon atoms. The heterocyclic group is preferably a heterocyclic group having a 5- or 6-membered ring containing an oxygen, nitrogen or sulfur atom or a heterocyclic group having a condensed ring consisting of one 5-membered ring and one 6-membered ring. Specific examples include a pyridyl group, a quinolyl group, a methylpyridyl group, an indolyl group, an imidazolyl group, a triazinyl group and a thienyl group.

Examples of the halogen atoms include a chlorine atom, a bromine atom and an iodine atom.

Specific examples of the anion A⁻ in formula (3) include n-butyltriphenylborate, n-octyltriphenylborate, n-dodecyltriphenylborate, sec-butyltriphenylborate, tert-butyltriphenylborate, benzyltriphenylborate, n-butyltrianisylborate, n-butyltri(1-naphthyl)borate, n-butyltri(4-methylnaphthyl)borate, methyltri(1-naphthyl)borate, tetra-n-butylborate, tetrabenzylborate, di-n-butyldiphenylborate, trimethylsilyltriphenylborate, triphenylsilyltriphenylborate and triisobutylphenylborate.

Examples of the cation Z⁺ in formula (4) include those having no photosensitivity in a visible light or near infrared light range such as a quaternary ammonium cation; a quaternary pyridinium cation; a quaternary quinolinium cation; a diazonium cation; a tetrazolium cation; a sulfonium cation; an oxosulfonium cation; metal cations such as cations of sodium, potassium, lithium, magnesium and calcium; (organic) compounds having a cationic charge on an oxygen atom such as a flavylium or pyranium salt; carbocations such as tropylium or cyclopropylium; halogenium cations such as iodonium; and cations of a compound containing a metal such as arsenic, cobalt, palladium, chromium, titanium, tin or antimony.

The dye irradiated with light of a wavelength in the photosensitizable range is excited by use of a combination of the organic boron compound and a cationic dye having a wavelength for photosensitization in the visible or near infrared range. Subsequently, electron transfer occurred between the dye and the organic boron compound decolors the dye and induces generation of radicals, which initiate a polymerization of coexisting polymerizable unsaturated compounds.

Differing from the conventional UV light-polymerization, the polymerization of the present invention has an advantage in that the amount of generated radicals is easily controlled and polymerization is easily stopped when unsaturated groups in the resin are partially radical-polymerized. In addition, the polymerization of the present invention easily proceeds even in a system containing a filler and a pigment, since light of a long wavelength, i.e., visible light or light in a near infrared range, is applied.

Examples of the above-described combination of the cationic dye and the organic boron compound include combinations described in detail in Japanese Unexamined Patent Publication (*kokal*) Nos. 3-111402, 3-179003, 4-146905, 4-261405, 4-261406, 5-194619, etc. Specific examples of the cationic dye [D⁺] are shown in Tables 1 and 2.

Among these cationic dyes, cyanine series dyes, styryl series cationic dyes, and triarylmethane series dyes are preferably used. Particularly, cyanine series dyes and styryl series cationic dyes are preferred in that electron transfer easily occurs between organic boron compounds and these cationic dyes.

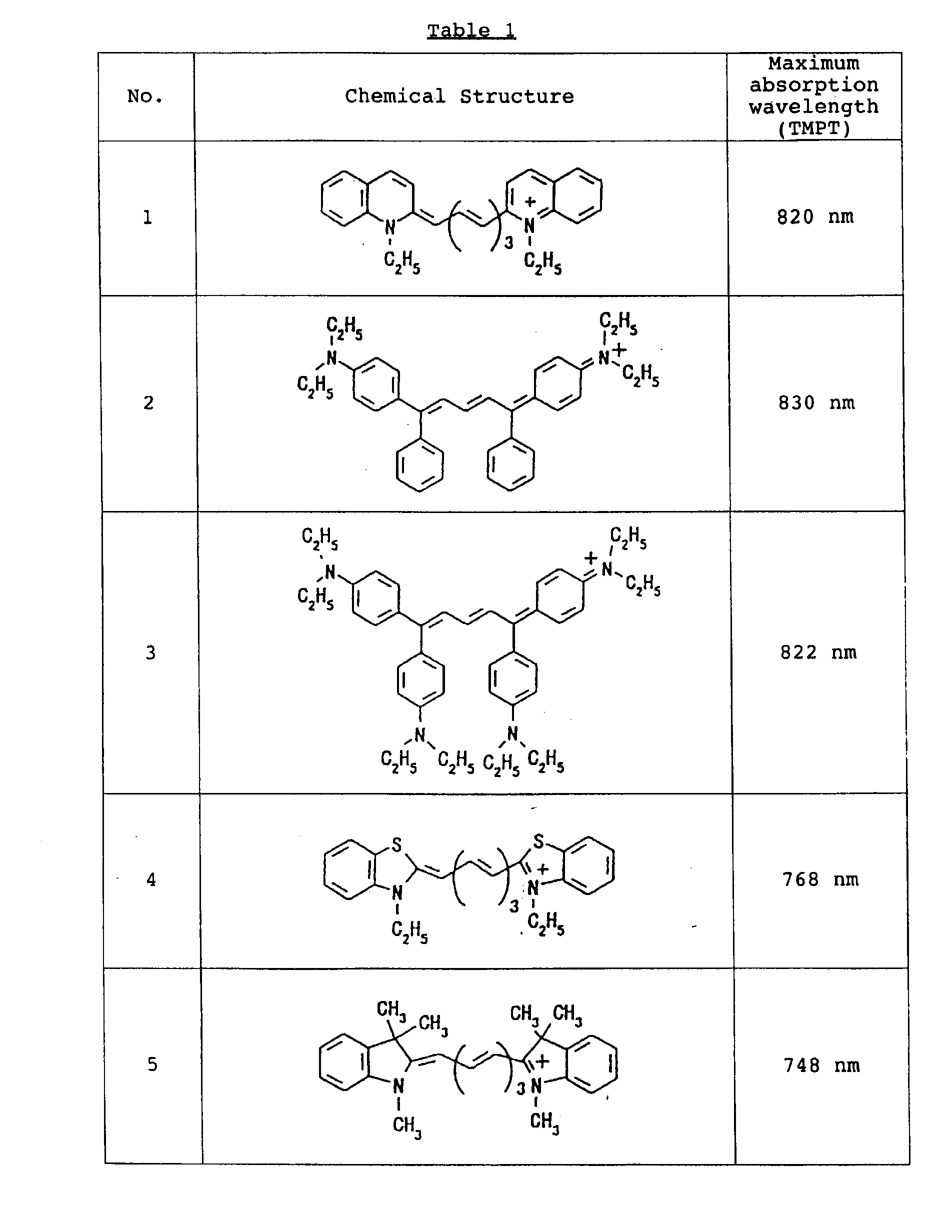

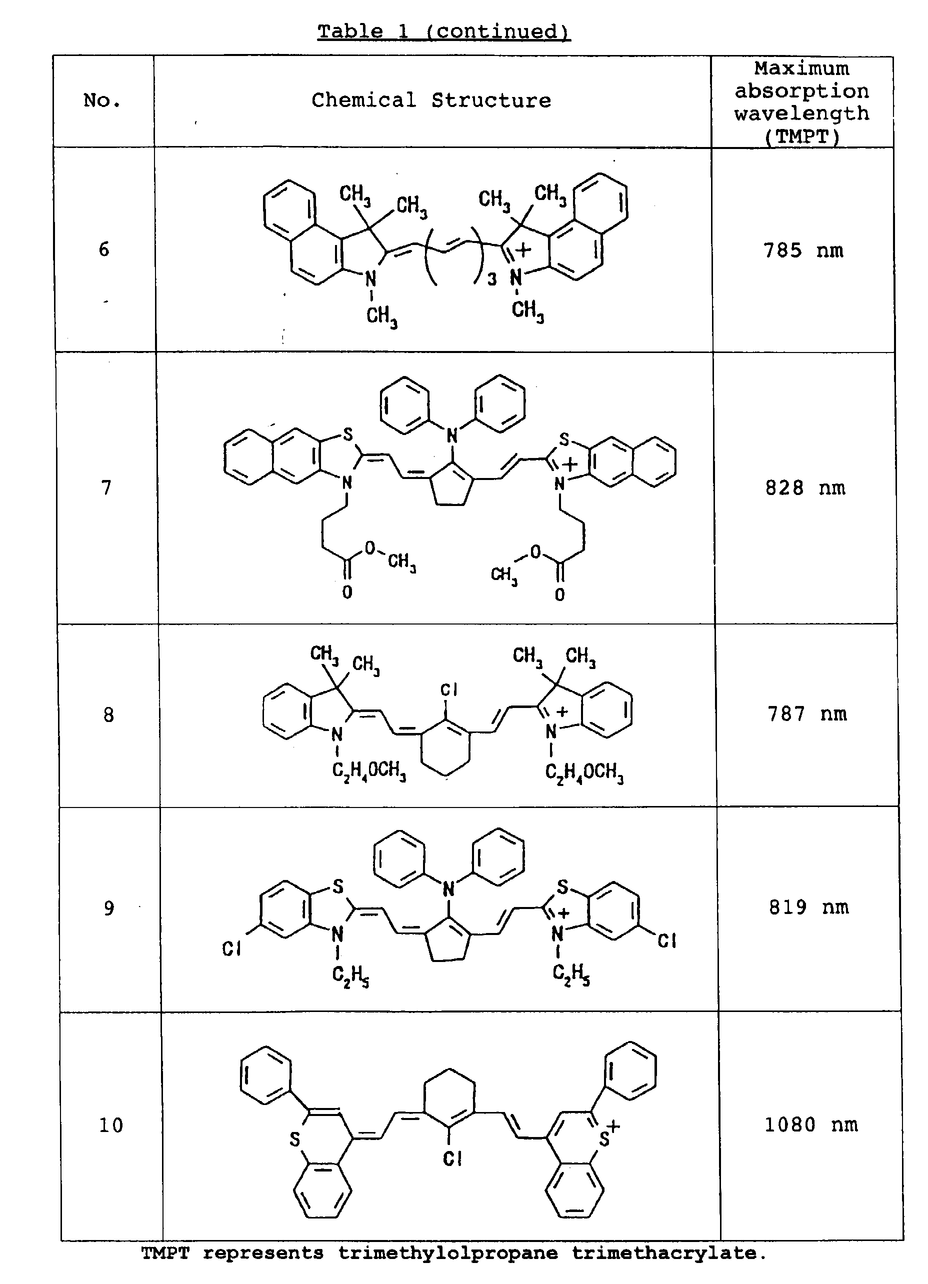

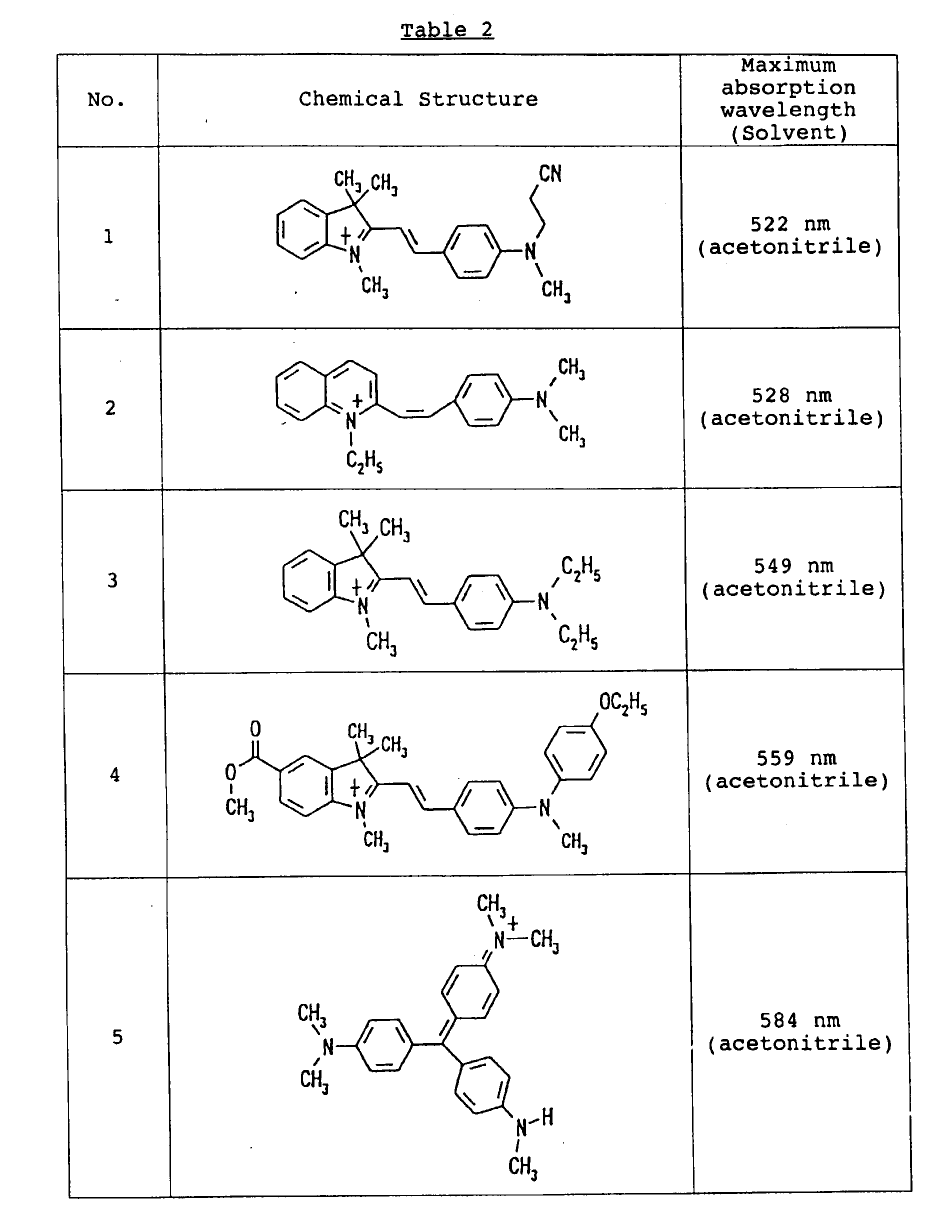

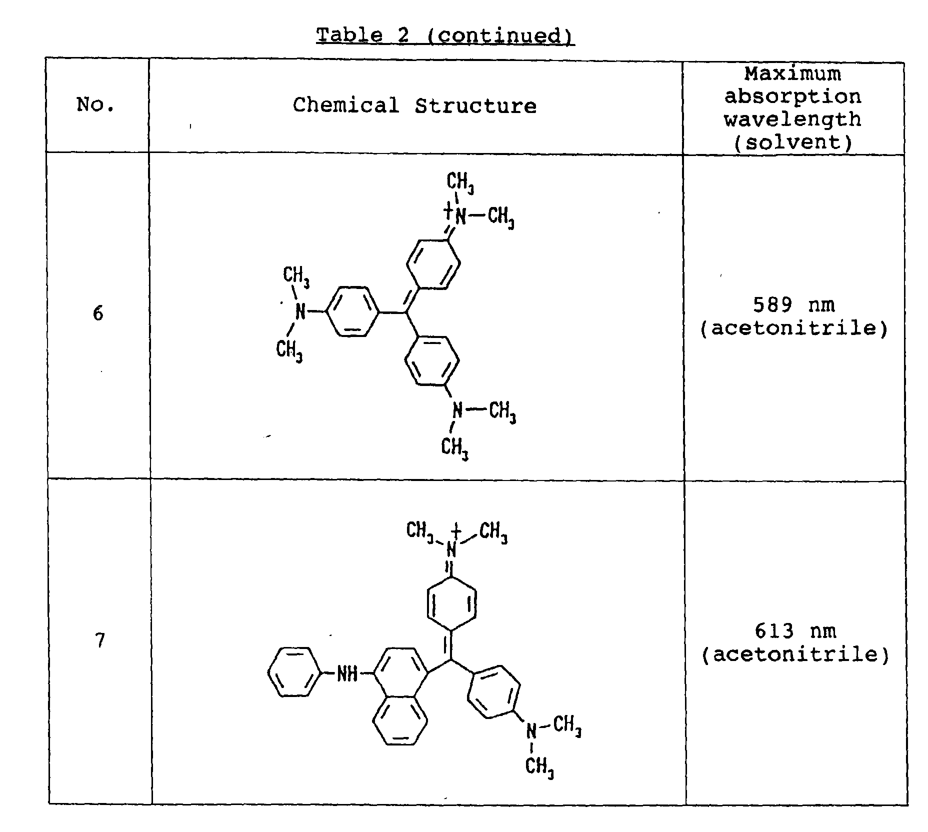

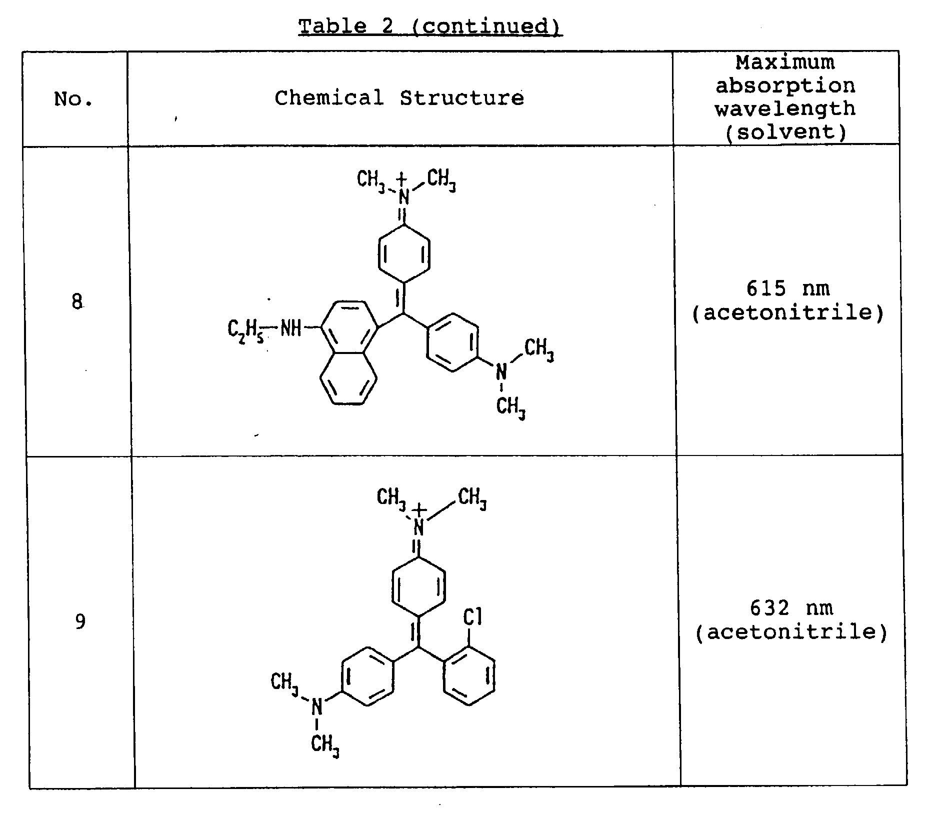

Examples of the anion A⁻, which is a counter anion of the cationic dye represented by formula (3), include a p-toluenesulfonate ion, organic carboxylate ions, a perchlorate ion, and halide ions. Particularly preferred are tetracoordinated borate anions represented by formula (8) 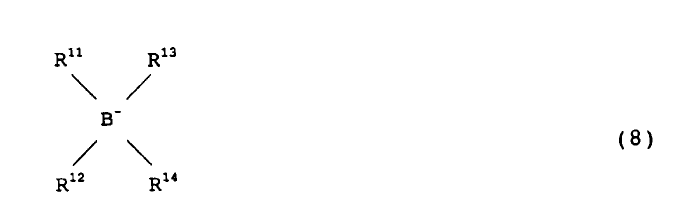 wherein each of R¹¹, R¹², R¹³ and R¹⁴ independently represents an alkyl group, an aryl group, an aralkyl group, an alkenyl group, an alkynyl group, a silyl group, a heterocyclic group or a halogen atom.

R¹¹ to R¹⁴ in formula (8) are as described above for R¹ to R⁴.

The organic boron compound and near infrared light-or visible light-absorbing cationic dye compound may be contained in a compositional ratio by weight of 1/5 - 1/0.05, preferably 1/1 - 1/0.1. Generally, the organic boron compound may preferably be used in an amount greater than that of the cationic dye, in view of decoloration reaction of the dye and efficiency of radical generation.

These polymerization initiators, i.e., initiators having photosensitivity within an arbitrary range between UV range and near infrared range inclusive, may be added in an amount of 0.1-10 parts by weight, preferably 0.5-5 parts by weight, based on 100 parts of a resin. These initiators may be used singly or in combination of two or more species. When the amount of photopolymerization initiators is considerably less than the above range, a surface of a product may remain wet due to insufficient polymerization; whereas when the amount of a visible light-polymerization initiator is in excess, the addition may be economically disadvantageous and cured products may have poor physical properties.

In the present invention, the photopolymerization initiator may preferably be combined with another photopolymerization initiator comprising an organic boron compound and an acidic compound and optionally a hexaarylbiimidazole compound.

These polymerization initiators are disclosed in Japanese Unexamined Patent Publication (*kokai*) Nos. 8-3210, 9-296016, etc.

Two types of polymerization initiators, having photosensitivity within an arbitrary range between UV range and near infrared range inclusive, are used in a step of B-staging carried out in a manner in which the composition is treated with light of a specific wavelength between UV range and near infrared range inclusive to thereby undergo prepolymerization that causes at least one of the photopolymerization initiators and radical-polymerizable unsaturated groups to remain partially intact. A combination of a cationic dye having photosensitivity in near infrared range or to visible light of a wavelength of 500 nm or more and an organic boron compound may be preferred as the above initiators. The feature is described in detail in Japanese Unexamined Patent Publication (*kokai*) No. 10-67865. The photopolymerization initiators used for B-staging may be added in an amount of 0.01-5 parts by weight, preferably 0.1-4 parts by weight based on 100 parts by weight of a resin.

In the present invention, the expressions "visible light" and "near infrared light" refer to light of a wavelength of 380-780 nm and light of a wavelength of 780-1200 nm, respectively. The light source which is used in the production of a prepreg made of the B-staged photopolymerizable compounds should have a spectral distribution within the photosensitization wavelength range of the photopolymerization initiator. For example, there may be used a near infrared lamp, a sodium lamp, a halogen lamp, a fluorescent lamp and a metal halide lamp. These lamps or light sources of broader wavelengths may be combined with a wavelength cutting filter so that light having a suitable wavelength for B-staging may be selected for irradiation. A detail description thereof is provided in Japanese Unexamined Patent Publication (*kokai*) No. 10-67865.

The irradiation time from a lamp required for B-staging the photopolymerizable compounds is not univocally determined, since light sources have different effective wavelength ranges and output powers, and the irradiation distance and the thickness of the composition product may vary. However, irradiation time of 0.01 hour or more, preferably 0.05 hours or more, suffices.

In the present invention, a variety of known thickening agents may be used for thickening with a metal component and/or with an isocyanate. As the thickening agents, there may be mentioned alkaline earth metal compounds such as magnesium oxide, calcium oxide, magnesium hydroxide and calcium hydroxide; aluminum alcoholates; and isocyanates such as hexamethylene diisocycnate and diphenylmethane diisocyanate. The thickening agent may be added in an amount of 0.5-10 parts by weight based on 100 parts by weight of the resin. When the amount is less than 0.5 parts by weight, a thickening effect may be substantially insufficient, whereas when the amount is in excess of 10 parts by weight, the viscosity of a resin may excessively increase, to thereby lower handlability of the resin.

When the thus-produced B-staged prepreg is irradiated with light, the prepreg is smoothly cured by a remained photopolymerization initiator. The light source which is used in curing of the prepreg should have a spectral distribution within the photosensitization wavelength range of the photopolymerization initiator. For example, there may be used sunlight, a metal halide lamp, a halogen lamp, and a UV lamp.

Particularly effective wavelength range for the curing of the B-staged prepreg may be 380 to 450 nm. When the wavelength is less than 380 nm, adequate light transmission may not be obtained, thereby resulting in insufficient curing depending on the thickness of the prepreg, while when the wavelength is greater than 450 nm, the initiator may not be effective as required. Further, the intensity of light in the above-mentioned wavelength range may preferably be not less than 10 mw/cm². when the light intensity is less than 10 mW/cm², the curing of the resulting FRP may be inadequate to lower the corrosion resistance thereof. The light intensity may be more preferably not less than 20 mW/cm², particularly not less than 50 mW/cm².

The present invention will be illustrated below by way of nonlimitative examples and comparative examples, wherein "parts" are by weight.

### Synthesis Example 1

### Synthesis of isophthalic acid-based unsaturated polyester resin: UP-1

Into a 40 L reactor equipped with a stirrer, a reflux condenser, a nitrogen gas conduit, and a thermometer, neopentyl glycol (40 mol), diethylene glycol (60 mol), isophthalic acid (45 mol), and fumaric acid (55 mol) were placed. The mixture was allowed to react at 200°C in a customary manner until the acid value of the reaction mixture became 15.

After completion of reaction, hydroquinone (0.015 parts) was added to the thus-obtained unsaturated polyester (100 parts), and the mixture was cooled to 160°C. Subsequently, a styrene monomer (54 parts) was added to the unsaturated polyester (100 parts), to thereby obtain an isophthalic acid-based unsaturated polyester resin (UP-1).

### Synthesis Example 2

### Synthesis of bisphenol A-based vinyl ester resin: VE-1

Into a reactor equipped with a stirrer, a reflux condenser, a gas conduit, and a thermometer, Epikote 828 (epoxy resin; product of Yuka Shell K.K.; epoxy equivalent 189) (189 parts), bisphenol A (57 parts), and triethylamine (0.3 parts) were placed. The mixture was allowed to react for two hours at 150°C in a nitrogen atmosphere. After completion of reaction, the mixture was cooled to 110°C. Into the reactor, methacrylic acid (43 parts), tris(dimethylaminomethyl)phenol (0.3 parts), hydroquinone (0.03 parts), and a styrene monomer (48 parts) were placed per equivalent of epoxy groups, and the mixture was allowed to react for 3-4 hours at 110-130°C with blowing air. When the acid value of the reaction mixture became five or less, the reaction was stopped. Subsequently, a styrene monomer (144 parts) was added, to thereby obtain a bisphenol A-based vinyl ester resin (VE-1).

### Synthesis Example 3

### Synthesis of phenol novolak vinyl ester resin: VE-2

Into a reactor equipped with a stirrer, a reflux condenser, a gas conduit, and a thermometer, DEN 438 (epoxy resin; product of Dow Chemical; epoxy equivalent 178) (178 parts), methacrylic acid (86 parts), tris(dimethylaminomethyl)phenol (0.3 parts), hydroquinone (0.03 parts), and a styrene monomer (28 parts) were placed. The mixture was allowed to react for 3-4 hours at 110-130°C with blowing air. When the acid value of the reaction mixture became five or less, the reaction was stopped. Subsequently, a styrene monomer (85 parts) was added, to thereby obtain a phenol novolak vinyl ester resin (VE-2).

### Example 1

To 100 parts of vinyl ester resin [VE-1], a bisacylphosphine oxide-containing photopolymerization initiator having a photosensitivity in ultraviolet to visible range (Irgacure 1800; comprising 1-hydroxycyclohexyl phenyl ketone (75%) and bis(2,6-dimethoxybenzoyl)-2,4-4-trimethylpentylphosphine oxide (25%); product of Ciba Specialty Chemicals K. K.; abbreviated as I-1800, hereinafter) (2.5 parts) was added, to thereby obtain a photocurable resin composition.

Subsequently, a surface mat [Surface Mat 30P, product of Nitto Boseki Co., Ltd.], a 3-ply of a #450 chopped strand mat [MC-450N, product of Nitto Boseki Co., Ltd.], and a surface mat were stacked such that the glass content of the laminate was adjusted to 25 wt.%. Both surfaces of the laminated was coated with PET film. The laminate was irradiated with light from a 250W metal halide lamp [product of Mitsubishi Electric Corp.], which is a visible light source, from a distance of 10 cm. Ten-minutes irradiation successfully cured the composition and yielded a laminated board having a Barcol hardness (BH) of 42, a flexural strength of 17 kgf/cm², and a flexural modulus of 565 kgf/cm².

Each sample obtained from the thus-obtained laminated board was dipped in each of chemical liquids shown in Table 3 for six months at the corresponding temperature. The resistance to chemicals of each sample was evaluated based on changes in the Barcol hardness according to JIS K-6911, flexural strength, flexural modulus, and appearance, at the times of before dipping, one month later; three months later, and six months later. The results are shown in Table 3.

### Comparative Example 1

The procedure of Example 1 was repeated except that a resin composition containing Permek N/Co naphthenate (Co : 6%) (1.0 part/0.5 parts) serving as a catalyst for curing at ambient temperature was used instead of a photopolymerization initiator, I-1800, and curing was carried out at ambient temperature for one day and at 120° for two hours, to thereby produce a laminated board. The results of tests on resistance to chemicals are shown in Table 3. At the initial stage, the laminated board had a BH of 40, a flexural strength of 17 kgf/cm², and a flexural modulus of 565 kgf/cm².

The laminated board obtained in Example 1 had better appearance and detention of strength higher than that of the laminated board obtained in Comparative Example 1 wherein a peroxide curing catalyst was employed.

**Table 3**

| Chemical | Temp. °C | Example | Dipping | BH retention % | Flexural Strength retention % | Flexural modulus retention % | Appearance |
|---|---|---|---|---|---|---|---|
| 15% NaOH | 70°C | Ex. 1 | before dipping | 100 | 100 | 100 | - |
| | | | 1 month | 100 | 94 | 100 | no change |
| | | | 3 months | 100 | 94 | 99 | blushing |
| | | | 6 months | 100 | 88 | 98 | severe blushing |
| | | Comp. Ex. 1 | before dipping | 100 | 100 | 100 | - |
| | | | 1 month | 95 | 55 | 96 | blushing |
| | | | 3 months | 88 | 55 | 91 | severe blushing |
| | | | 6 months | 75 | 35 | 78 | severe blushing |
| 15% HCl | 70°C | Ex. 1 | before dipping | 100 | 100 | 100 | - |
| | | | 1 month | 100 | 100 | 100 | no change |
| | | | 3 months | 100 | 94 | 100 | slight blushing |
| | | | 6 months | 100 | 94 | 98 | blushing |
| | | Comp. Ex. 1 | before dipping | 100 | 100 | 100 | - |
| | | | 1 month | 100 | 82 | 91 | slight blushing |
| | | | 3 months | 98 | 81 | 91 | blushing |
| | | | 6 months | 88 | 70 | 82 | severe blushing |
| 50% EtOH | 40°C | Ex. 1 | before dipping | 100 | 100 | 100 | - |
| | | | 1 month | 95 | 100 | 100 | slight blushing |
| | | | 3 months | 93 | 94 | 96 | blushing |
| | | | 6 months | 88 | 82 | 93 | severe blushing |
| | | Comp. Ex. 1 | before dipping | 100 | 100 | 100 | - |
| | | | 1 month | 95 | 82 | 80 | blushing |
| | | | 3 months | 70 | 80 | 75 | severe blushing |
| | | | 6 months | 50 | 58 | 64 | severe blushing |

### Example 2

To 100 parts of vinyl ester resin [VE-2], a bisacylphosphine oxide-containing photopolymerization initiator having a photosensitivity in ultraviolet to visible range [bis(2,4,6-trimethylbenzoyl)phenylphosphine oxide, Irgacure 819; product of Ciba Specialty Chemicals K. K.; abbreviated as I-819, hereinafter] (1.5 parts) and a photopolymerization initiator: 1,1,5,5-tetrakis(p-diphenylaminophenyl)-2,4-pentadienyl p-toluenesulfonate having a photosensitivity in near infrared range [product of Showa Denko K. K.; abbreviated as IRT, hereinafter; (cationic dye absorbing near infrared light)] (0.03 parts) and tetra-n-butylammonium triphenyl-n-butylborate [product of Showa Denko K. K.; abbreviated as P3B, hereinafter; (organic boron compound)] (0.15 parts) were added, to thereby obtain a photocurable resin composition.

Subsequently, a surface mat, a 3-ply of a #450 chopped strand mat, and a surface mat were stacked such that the glass content of the laminate was adjusted to 25 wt.%. Both surfaces of the laminate was coated with PET film. The laminate was irradiated with light from a 1kW halogen lamp [AL-spot light ALF-10: product of RDS Corporation], which is a source of light having a wavelength of 380-1200 nm by use of a filter SC 60 [product of Fuji Photo Film Co., Ltd.] cutting light having a wavelength of 600 nm or less, from a distance of 50 cm. Ten-minutes irradiation brought the laminate to B-stage and a prepreg sheet was produced. The prepreg sheet was irradiated with light from a 250W metal halide lamp [product of Mitsubishi Electric Corp.], which is a visible light source, from a distance of 10 cm. Five-minutes irradiation successfully cured the composition and yielded a laminated board having a BH of 42, a flexural strength of 11 kgf/cm², and a flexural modulus of 560 kgf/cm².

Each sample obtained from the thus-obtained laminated board was dipped in each of the chemical liquids shown in Table 4 for six months at the corresponding temperature. The resistance to chemicals of each sample was evaluated based on changes in the Barcol hardness according to JIS K-6911, flexural strength, flexural modulus, and appearance, at the times of before dipping, one month later, three months later, and six months later. The results are shown in Table 4.

### Comparative Example 2

A resin composition curable at ambient temperature was prepared by adding Permek N/Co naphthenate (Co : 6%) (1.0 part/0.5 parts) serving as a catalyst for curing at ambient temperature to 100 parts of vinyl ester resin [VE-2]. The procedure of Comparative Example 1 was repeated, to thereby produce a laminated board. Tests on resistance to chemicals were conducted as shown in Table 4. At the initial stage, the laminated board had a BH of 42, a flexural strength of 11 kgf/cm², and a flexural modulus of 550 kgf/cm².

The laminated board obtained in Example 2 had better appearance and retention of strength higher than that of the laminated board obtained in Comparative Example 2 wherein a peroxide curing catalyst was employed.

### Example 3

To 100 parts of vinyl ester resin [VE-1], diphenylmethane diisocyanate (MDI) ISONATE 143L [product of Mitsubishi Dow] (4 parts), IRT (0.1 part), P3B (0.5 parts), and I-819 (0.25 parts) were mixed, to thereby obtain a photocurable resin composition.

Subsequently, a surface mat, a 3-ply of a #450 chopped strand mat, and a surface mat were stacked such that the glass content of the laminate was adjusted to 25 wt.%. Both surfaces of the laminated was coated with PET film. The laminate was allowed to stand at 40°C in the dark for 24 hours to thereby bring the laminate to B-stage, and a prepreg sheet was produced.

The prepreg sheet was irradiated with light from a 1kW halogen lamp [AL-spot light ALF-10] from a distance of 30 cm. Ten-minutes irradiation successfully cured the composition and yielded a laminated board having a BH of 43, a flexural strength of 20 kgf/cm², and a flexural modulus of 550 kgf/cm².

Each sample obtained from the thus-obtained laminated board was dipped in each of the chemical liquids shown in Table 4 for six months at the corresponding temperature. The resistance to chemicals of each sample was evaluated based on changes in the Barcol hardness according to JIS K-6911, flexural strength, flexural modulus, and appearance, at the times of before dipping, one month later, three months later, and six months later. The results are shown in Table 4.

### Comparative Example 3

A resin composition curable at ambient temperature was prepared by adding Permek N/Co naphthenate (Co : 6%)(1.0 part/0.5 parts) serving as a catalyst for curing at ambient temperature to 100 parts of vinyl ester resin [VE-1]. The procedure of Comparative Example 1 was repeated, to thereby produce a laminated board. Tests on resistance to chemicals were conducted as shown in Table 4. At the initial stage, the laminated board had a BH of 40, a flexural strength of 21 kgf/cm², and a flexural modulus of 560 kgf/cm².

The laminated board obtained in Example 3 had better appearance and retention of strength higher than that of the laminated board obtained in Comparative Example 3 wherein a peroxide curing catalyst was employed.

### Example 4

To 100 parts of isophthalic acid-based unsaturated polyester resin [UP-1], magnesium oxide [Magmic; product of Kyowa Chemical Industry K.K.] (1 part) and a photopolymerization initiator having a photosensitivity in UV range (2,2-dimethoxy-1,2-diphenylethane-1-one, Irgacure 651; product of Ciba Specialty Chemicals K. K.; abbreviated as I-651, hereinafter) (1.5 parts) were mixed, to thereby obtain a photocurable resin composition.

Subsequently, a surface mat, a 3-ply of a chopped strand mat, and a surface mat were stacked such that the glass content of the laminate was adjusted to 25 wt.%. Both surfaces of the laminated was coated with PET film. The laminate was allowed to stand at 40°C in the dark for 48 hours, to thereby bring the laminate to B-stage, and a prepreg sheet was produced.

The prepreg sheet was UV-irradiated with light from a 1kw high-pressure mercury lamp (1 pass = 60 mJ/cm²) which is a UV light source. Irradiation of 30 passes successfully cured the sheet completely to the back surface and yielded a laminated board having a BH of 41, a flexural strength of 15 kgf/cm², and a flexural modulus of 570 kgf/cm².

Each sample obtained from the thus-obtained laminated board was dipped in each of chemical liquids shown in Table 4 for six months at the corresponding temperature. The resistance to chemicals of each sample was evaluated based on changes in the Barcol hardness according to JIS K-6911, flexural strength, flexural modulus, and appearance, at the times of before dipping, one month later, three months later, and six months later. The results are shown in Table 4.

### Comparative Example 4

A resin composition curable at ambient temperature was prepared by adding Permek N/Co naphthenate (Co : 6%) (1.0 part/0.5 parts) serving as a catalyst for curing at ambient temperature to 100 parts of unsaturated polyester resin [UP-1]. The procedure of Comparative Example 1 was repeated, to thereby produce a laminated board. Tests on resistance to chemicals were conducted as shown in Table 4. At the initial stage, the laminated board had a BH of 42, a flexural strength of 10 kgf/cm², and a flexural modulus of 565 kgf/cm².

The laminated board obtained in Example 4 had better appearance and retention of strength higher than that of the laminated board obtained in Comparative Example 4 wherein a peroxide curing catalyst was employed.

**Table 4**

| Chemical | Temp. °C | Example | Dipping | BH retention % | Flexural Strength retention % | Flexural modulus retention % | Appearance |
|---|---|---|---|---|---|---|---|
| 15% KOH | 70°C | Ex. 2 | before dipping | 100 | 100 | 100 | - |
| | | | 1 month | 100 | 91 | 100 | slight blushing |
| | | | 3 months | 80 | 82 | 91 | blushing |
| | | | 6 months | 24 | 45 | 36 | severe blushing |
| | | Comp. Ex. 2 | before dipping | 100 | 100 | 100 | - |
| | | | 1 month | 90 | 82 | 94 | blushing |
| | | | 3 months | 14 | 43 | 33 | severe blushing |
| | | | 6 months | not measurable | | | severe blushing |
| 25% H₂SO₄ | 70°C | Ex. 3 | before dipping | 100 | 100 | 100 | - |
| | | | 1 month | 100 | 90 | 98 | no change |
| | | | 3 months | 95 | 90 | 93 | slight blushing |
| | | | 6 months | 93 | 89 | 90 | blushing |
| | | Comp. EX. 3 | before dipping | 100 | 100 | 100 | - |
| | | | 1 month | 100 | 86 | 96 | slight blushing |
| | | | 3 months | 98 | 76 | 86 | blushing |
| | | | 6 months | 88 | 73 | 80 | severe blushing |
| Distilled water | 90°C | EX. 4 | before dipping | 100 | 100 | 100 | - |
| | | | 1 month | 100 | 100 | 100 | slight blushing |
| | | | 3 months | 100 | 93 | 99 | blushing |
| | | | 6 months | 97 | 91 | 96 | severe blushing |
| | | Comp. Ex. 4 | before dipping | 100 | 100 | 100 | - |
| | | | 1 month | 100 | 78 | 99 | blushing |
| | | | 3 months | 96 | 78 | 95 | severe blushing |
| | | | 6 months | 93 | 71 | 91 | severe blushing |

### Example 5

To 100 parts of a vinyl ester resin [VE-1], I-1800 (2.5 parts) was added, to thereby obtain a photocurable resin composition. Subsequently, the photocurable resin composition was cast into a frame made of a glass plate such that the thickness of the board was 3 mm and irradiated with light from a 2KW metal halide lamp [Dynabeam 2; product of Toshiba Lighting & Technology Corporation], which is a visible light source, from a distance of 1 m. Ten-minutes irradiation successfully cured the composition.

The thus-obtained cast board was dipped in a 5% aqueous solution of nitric acid and a 5% aqueous solution of sodium hydroxide, respectively, at 99°C for one year and retention of flexural strength was measured. The results are shown in Table 5.

### Comparative Example 5

The procedure of Example 5 was repeated except that a resin composition containing Permek N/Co naphthenate (Co : 6%) (1.0 part/0.5 parts) serving as a catalyst for curing at ambient temperature was used instead of a photopolymerization initiator, I-1800, and curing was carried out at ambient temperature for one day plus at 120° for two hours, to thereby produce a laminated board. The same tests as carried out in Example 5 was repeated. The results are shown in Table 5.

The laminated board obtained in Example 5 had retention of strength higher than that of the laminated board obtained in Comparative Example 5 wherein a peroxide curing catalyst was employed. Thus, the laminated board was confirmed to serve as an excellent resin for lining.

**Table 5**

| | Chemicals | Example 5 | Camp. Ex. 5 |
|---|---|---|---|
| Flexural strength retention (%) | 5% HNO₃ | 88 | 75 |
| | 5% NaOH | 45 | 18 |

### Example 6

To 100 parts of bisphenol A-based vinyl ester resin containing glass flake and used for lining [Ripoxy FC-83; product of Showa Highpolymer Co., Ltd.], I-819 (0.5 parts) was added, Additional glass flake was added such that the glass flake content was adjusted to 40 wt.%, to thereby obtain a photocurable flake compound.

Subsequently, to a 2-mm-thickness iron board was surface-treated and subjected to a primer treatment (curing at ambient temperature) by use of Ripoxy R-806DA (328E/Co naphthenate (1.5/0.5). The photocurable flake compound was applied thereto as a coating in a coating thickness of 500 µm. The coating was irradiated with light from a 250W metal halide lamp from a distance of 10 cm. Ten-minutes irradiation successfully cured the composition which was applied on both surfaces.

The thus-obtained test pieces were dipped in a 5% aqueous solution of nitric acid at 60°C for three months and appearance of the surfaces was observed. The results are shown in Table 6.

### Comparative Example 6

The procedure of Example 6 was repeated except that a resin composition containing Permek 328E/Co naphthenate (1.5/0.5 = 1.5/0.5) serving as a catalyst for curing at ambient temperature was used instead of a photopolymerization initiator, I-819, and curing was carried out at ambient temperature for one day and at 120°C for two hours, to thereby produce a cast board. The same tests as carried out in Example 6 was repeated. The results are shown in Table 6.

The laminated board obtained in Example 6 was confirmed to be more excellent than the laminated board obtained in Comparative Example 6 wherein a peroxide curing catalyst was employed.

**Table 6**

| | Change in appearance |
|---|---|
| Example 6 | No change |
| Comp. Ex. 6 | blistered, corrosion generated in undercoating |

The method for molding a corrosion-resistant FRP according to the present invention effectively produces a molded product and forms a lining surface of a tank, a pipe, a concrete bath, and a floor when a hand-lay-up method is applied or a prepreg is used.

Although the reason has not been elucidated, products obtained through the method of photocuring, particularly curing by visible light, according to the present invention have excellent properties as compared to the products obtained through curing by use of a peroxide curing catalyst. It is noteworthy that the products obtained in the invention have excellent resistance to acid and an organic solvent, and furthermore, excellent resistance to an alkali that an unsaturated polyester resin and a vinyl ester resin do not possess.

In the method for molding an FRP according to the present invention, an uncured FRP composition is shaped through a conventional method for molding an FRP and cured at ambient temperature through simple exposure to light or sunlight. Thus, the method is excellent in that shaping and handling of a raw material are easy.

## Claims

1. A method for molding a corrosion-resistant FRP, which comprises irradiating a resin composition with light, the composition comprising
100 parts by weight of (A) an isophthalic acid-based unsaturated polyester resin and/or a vinyl ester resin containing a vinyl ester oligomer having a structure represented by formula (1) 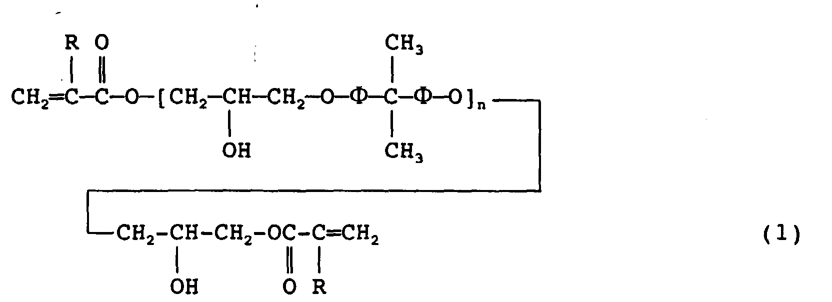 wherein Φ represents a p-phenylene group, R each independently represents a hydrogen atom or a methyl group, and n is 1-6, and/or a vinyl ester oligomer having a structure represented by formula (2) 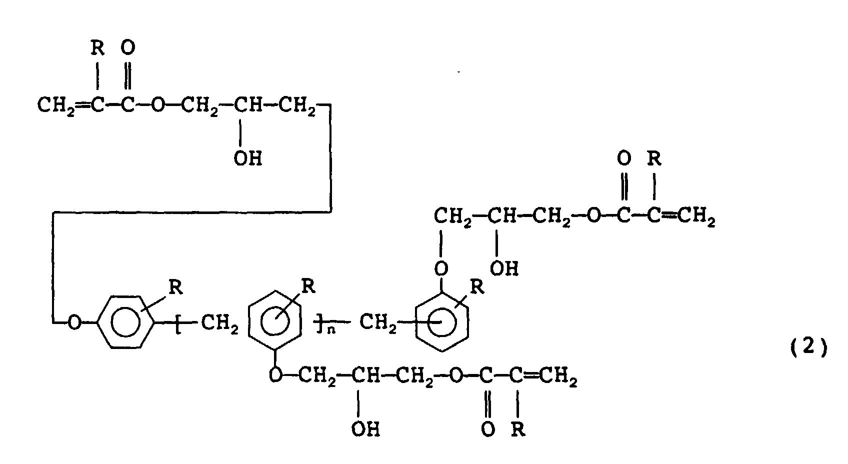 wherein R each independently represents a hydrogen atom or a methyl group and n is 1-5, which oligomers are diluted with a styrenic monomer and/or a (meth)acrylic monomer;
0-200 parts by weight of (B) a fiber reinforcing material and/or filler; and
0.1-10 parts by weight of (C) a photopolymerization initiator.

2. A method according to claim 1, wherein the polyester or vinyl ester has an unsaturated group equivalent of 100 to 800.

3. A method according to claim 1, wherein the polyester or vinyl ester is diluted with a styrenic monomer.

4. A method for molding a corrosion-resistant FRP, which comprises B-staging a resin composition comprising
100 parts by weight of (A) an isophthalic acid-based unsaturated polyester resin and/or a vinyl ester resin containing a vinyl ester oligomer having a structure represented by formula (1) 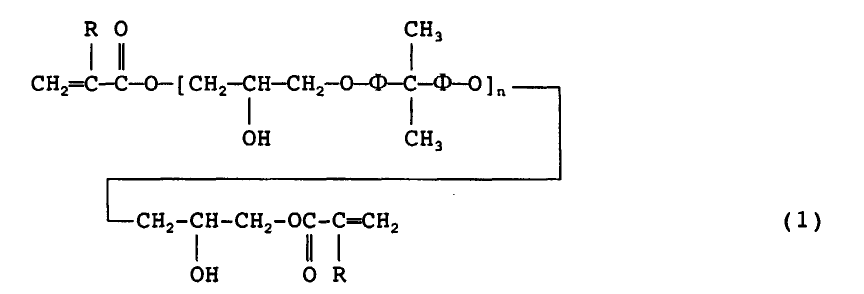 wherein Φ represents a p-phenylene group, R each independently represents a hydrogen atom or a methyl group, and n is 1-6, and/or a vinyl ester oligomer having a structure represented by formula (2) 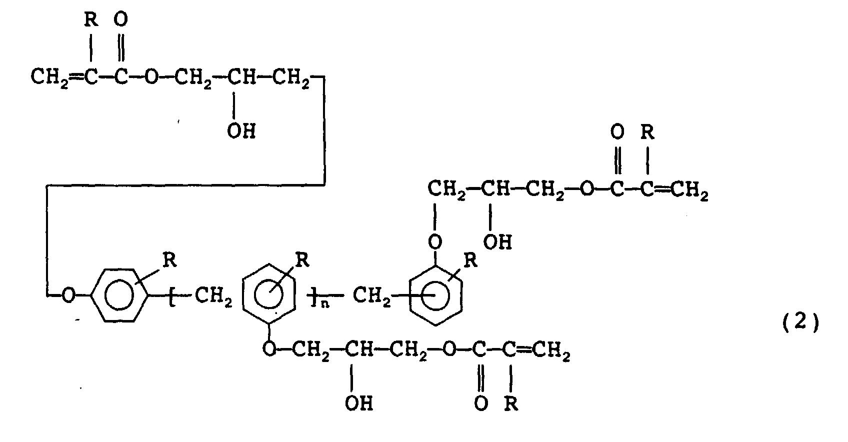 wherein R each independently represents a hydrogen atom or a methyl group and n is 1-5, which oligomers are diluted with a styrenic monomer and/or a (meth)acrylic monomer;
0-200 parts by weight of (B) a fiber reinforcing material and/or filler; and
0.1-10 parts by weight of (C) a photopolymerization initiator, to thereby produce a prepreg, and irradiating the prepreg with light for curing.

5. A method according to claim 1 or 4, wherein the photopolymerization initiator has photosensitivity within a range between UV range and near infrared range inclusive.

6. A method according to claim 1, 4 or 5, wherein the photopolymerization initiator having photosensitivity within a range between UV range and near infrared range inclusive comprises a combination of a cationic dye having photosensitivity in visible or near infrared range represented by formula (3)
D⁺·A⁻ (3)
wherein D⁺ represents a dye cation which has photosensitivity in visible or near infrared range and which is derived from methine, polymethine, cyanine, xanthene, oxazine, thiazine, arylmethane or pyrylium; and A⁻ represents an anion, and an organic boron compound represented by formula (4) 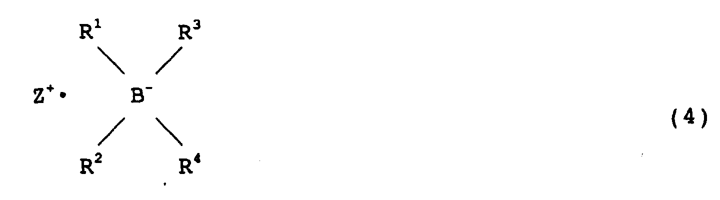 wherein Z⁺ represents an arbitrary cation, each of R¹, R², R³ and R⁴ independently represents an alkyl group, an aryl group, an aralkyl group, an alkenyl group, an alkynyl group, a silyl group, a heterocyclic group or a halogen atom.

7. A method according to claim 6, wherein the organic boron compound and cationic dye compound are contained in a compositional ratio by weight of 1/5 to 1/0.05.

8. A method according to claim 6, wherein the organic boron compound and cationic dye compound are present in a compositional ratio by weight of 1/1 to 1/0.05.

9. A method according to claim 1, 4 or 5, wherein the photopolymerization initiator having photosensitivity within a range between UV range and near infrared range inclusive comprises an acylphosphine oxide compound which has photosensitivity in UV or visible range.

10. A method according to any one of claim 1, 4 to 6 and 9, wherein the photopolymerization initiator having photosensitivity within a range between UV range and near infrared range inclusive is combined with another photopolymerization initiator comprising an organic boron compound represented by formula (4) and an acidic compound or comprising an organic boron compound represented by formula (4), an acidic compound, and a hexaarylbiimidazole compound represented by formula (5) 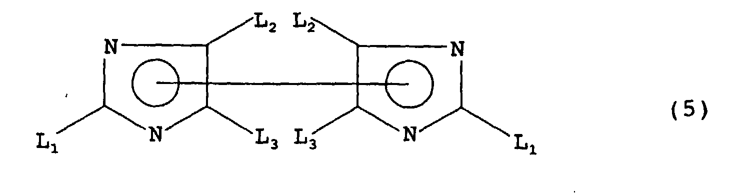 wherein each of L₁, L₂ and L₃ independently represents an aryl group or a substituted aryl group.

11. A method according to claim 10, wherein the hexaarylbiimidazole compound is bis(2-o-bromophenyl-4,5-diphenyl)imidazole.

12. A method according to any one of claims 1, 4 to 6, 9 and 10, wherein B-staging is carried out in a manner in which the composition is treated with light of a wavelength between UV range and near infrared range inclusive to thereby undergo prepolymerization that causes at least one of the photopolymerization initiators and radical-polymerizable unsaturated groups to remain partially intact.

13. A method according to any one of claims 1, 4 to 6, 9 and 10, wherein B-staging is carried out through thickening with a metal component and/or with an isocyanate.

14. A method according to any one of claims 1, 4 to 6, 9, 10, 12 and 13, wherein a light source for causing photocuring is a light source generating visible light and/or sunlight.

15. A method for molding a corrosion-resistant FRP according to claim 14, wherein light causing photocuring and having a wavelength falling within the range of 380 to 450 nm has an illuminance of 10 mW/cm² or more at a wavelength falling within the range of 380 to 450 nm.
